# EUROPEAN PATENT APPLICATION

(11) **EP 4 679 388 A1**
(43) Date of publication of application: **14.01.2026**
(21) Application number: 24933198.4
(22) Date of filing: 22.10.2024
(51) Int. Cl.: G06V 40/13

(54) **FINGERPRINT BACKGROUND DATA ACQUISITION METHOD AND APPARATUS, AND ELECTRONIC DEVICE AND STORAGE MEDIUM**

(30) Priority: 08.04.2024 CN 202410417721
(71) Applicant: Shenzhen Goodix Technology Co., Ltd., Shenzhen, Guangdong 518045 (CN)
(72) Inventor: LUO, Chengfeng, Shenzhen, Guangdong 518045 (CN); WU, Dongcheng, Shenzhen, Guangdong 518045 (CN)
(74) Representative: Kraus & Lederer PartGmbB
(86) International application number: PCT/CN2024/126535
(87) International publication number: WO 2025/213741

(57) **Abstract**

Embodiments of the present disclosure provide a method for obtaining fingerprint background data, an apparatus for obtaining fingerprint background data, an electronic device, and a storage medium, wherein the method for obtaining fingerprint background data comprises: obtaining multiple frames of fingerprint images by a fingerprint module; and updating initial fingerprint background data based on at least some fingerprint images among the multiple frames of fingerprint images to obtain fingerprint background data of the fingerprint module. The method for obtaining fingerprint background data in the embodiments of the present disclosure determines the fingerprint background data during the acquiring the fingerprint images, so that the fingerprint background data can be determined when a user enters his fingerprint for a first time without the need to obtain the fingerprint background data via a detection apparatus in a particular detection environment during the assembly of the fingerprint module. Therefore, it is not necessary to provide the detection apparatus and a detection environment during the assembly, thereby reducing the assembly costs of the fingerprint module, and improving the assembly efficiency of the fingerprint module.

## Description

The present disclosure claims priority to Patent Application with the application No. "202410417721.6" titled "METHOD FOR OBTAINING FINGERPRINT BACKGROUND DATA, APPARATUS FOR OBTAINING FINGERPRINT BACKGROUND DATA, ELECTRONIC DEVICE, AND STORAGE MEDIUM" and filed on 08 April 2024, the entire content of which is incorporated herein by reference.

### TECHNICAL FIELD

Embodiments of the present disclosure relate to the technical field of data processing, and particularly relate to a method for obtaining fingerprint background data, an apparatus for obtaining fingerprint background data, an electronic device, and a storage medium.

### BACKGROUND

With the development of the consumer electronics industry, under-screen optical fingerprint technology is widely used in a terminal device, such as a smart phone, a tablet computer, or a door lock. The principle of the under-screen optical fingerprint technology is to emit light using a screen or in other ways, the light passes through the screen or a glass surface and then radiates on a finger, and the light reflected from the finger passes through the screen, so that a fingerprint module arranged below the screen receives the reflected light, thereby realizing fingerprint image acquisition and fingerprint recognition.

At present, when the fingerprint module is assembled into an electronic device, it is necessary to test the fingerprint module via a plurality of test heads to determine fingerprint background data of the fingerprint module, thereby determining an image corresponding to a fingerprint in a fingerprint image acquired by the fingerprint module based on the fingerprint background data when the fingerprint module is used.

However, when the fingerprint module is tested via the plurality of test heads during the assembly of the fingerprint module, a professional detection apparatus or detection environment is required, which is costly with long test time, thereby resulting in low assembly efficiency of the fingerprint module.

### SUMMARY

In view of this, embodiments of the present disclosure provide a method for obtaining fingerprint background data, an apparatus for obtaining fingerprint background data, an electronic device, and a computer storage medium, to at least partially solve the above problems.

According to an embodiment in a first aspect of the present disclosure, a method for obtaining fingerprint background data is provided, comprising: obtaining multiple frames of fingerprint images by a fingerprint module; and updating initial fingerprint background data based on at least some fingerprint images among the multiple frames of fingerprint images to obtain fingerprint background data of the fingerprint module.

According to an embodiment in a second aspect of the present disclosure, an apparatus for obtaining fingerprint background data is provided, comprising: an obtaining unit configured to obtain multiple frames of fingerprint images by a fingerprint module; and an update unit configured to update initial fingerprint background data based on at least some fingerprint images among the multiple frames of fingerprint images to obtain fingerprint background data of the fingerprint module.

According to an embodiment in a third aspect of the present disclosure, an electronic device is provided, including: a processor, a memory, a communications interface, and a communication bus, wherein the processor, the memory, and the communications interface communicate with each other through the communication bus; and the memory is configured to store at least one executable instruction, wherein the at least one executable instruction enables the processor to implement operations corresponding to the method according to the first aspect.

According to an embodiment in a fourth aspect of the present disclosure, a computer storage medium is provided, storing a computer program thereon, wherein the program, when executed by a processor, implements the method according to the first aspect.

According to the solutions for obtaining fingerprint background data provided in the embodiments of the present disclosure, multiple frames of fingerprint images are obtained by a fingerprint module, and initial fingerprint background data is updated based on at least some fingerprint images among the multiple frames of fingerprint images, thereby obtaining the fingerprint background data corresponding to the fingerprint module. The method for obtaining fingerprint background data in the embodiments of the present disclosure determines the fingerprint background data during the acquiring the fingerprint images, so that the fingerprint background data can be determined when a user enters his fingerprint for a first time without the need to obtain the fingerprint background data via a detection apparatus in a particular detection environment during the assembly of the fingerprint module, compared with the prior art. Therefore, it is not necessary to provide the detection apparatus and a detection environment during the assembly, thereby reducing the assembly costs of the fingerprint module, and improving the assembly efficiency of the fingerprint module.

### BRIEF DESCRIPTION OF DRAWINGS

To more clearly describe technical solutions of embodiments of the present disclosure or the prior art, drawings to be used in the description of the embodiments or the prior art will be briefly introduced below. Apparently, the drawings in the description below are merely some embodiments disclosed in the embodiments of the present disclosure. For those of ordinary skills in the art, other drawings may also be obtained based on these drawings.
FIG. 1 is a flowchart of a method for obtaining fingerprint background data provided in an embodiment of the present disclosure;
FIG. 2 is an example of fingerprint background data provided in an embodiment of the present disclosure;
FIG. 3 is a schematic diagram of an image of a fingerprint provided in an embodiment of the present disclosure;
FIG. 4 is a schematic diagram of an identifier image provided in an embodiment of the present disclosure;
FIG. 5 is a flowchart of a method for assembling and calibrating a fingerprint module provided in an embodiment of the present disclosure;
FIG. 6 is a schematic diagram of a first calibration image provided in an embodiment of the present disclosure;
FIG. 7 is a flowchart of another method for assembling and calibrating a fingerprint module provided in an embodiment of the present disclosure;
FIG. 8 is a schematic diagram of a calibration image provided in an embodiment of the present disclosure;
FIG. 9 is a schematic diagram of an apparatus for obtaining fingerprint background data provided in an embodiment of the present disclosure; and
FIG. 10 is a schematic structural diagram of an electronic device provided in an embodiment of the present disclosure.

### DETAILED DESCRIPTION

To enable those skilled in the art to better understand technical solutions of embodiments of the present disclosure, the technical solutions of the embodiments of the present disclosure will be clearly and completely described below with reference to the drawings in the embodiments of the present disclosure. Apparently, the described embodiments are merely some, instead of all, of the embodiments of the present disclosure. All other embodiments obtained by those of ordinary skills in the art based on some embodiments among the embodiments of the present disclosure should be encompassed within the scope of protection of the embodiments of the present disclosure.

The terms used in the present disclosure are intended merely to describe particular embodiments, and are not intended to limit the present disclosure. The singular forms of "a" and "the" used in the present disclosure and the appended claims are also intended to include plural forms, unless the context explicitly indicates other meanings. It should be further understood that the term "and/or" used herein refers to and includes any or all possible combinations of one or more associated enumerated items.

It should be understood that various kinds of information may be described by using the terms, such as first, second, and third, in the present disclosure, but the information should not be limited to these terms. These terms are merely used to distinguish between information of a same type. For example, the first information may also be referred to as the second information, and similarly, the second information may also be referred to as the first information, without departing from the scope of the present disclosure. Depending on the context, as used herein, the word "if" may be interpreted as "at the time of..." or "when..." or "in response to determining."

As mentioned above, with the development of the consumer electronics industry, under-screen optical fingerprint technology is widely used in a terminal device, such as a smart phone, a tablet computer, or a door lock. The principle of the under-screen optical fingerprint technology is to emit light using a screen or in other ways, the light passes through the screen or a glass surface and then radiates on a finger, and the light reflected from the finger passes through the screen, so that a fingerprint module arranged below the screen receives the reflected light, thereby realizing fingerprint image acquisition and fingerprint recognition. At present, when the fingerprint module is assembled into an electronic device, it is necessary to test the fingerprint module via a plurality of test heads to determine fingerprint background data of the fingerprint module, thereby determining an image corresponding to a fingerprint in a fingerprint image based on the fingerprint background data when the fingerprint module is used. Specifically, before performing fingerprint recognition using the fingerprint module, a user needs to register the fingerprint by acquiring the fingerprint image via the fingerprint module, and then remove background images except for the image of the fingerprint in the fingerprint image based on the fingerprint background data to obtain the image corresponding to the fingerprint. However, when the fingerprint module is tested via the plurality of test heads, a special detection apparatus or detection environment is required, which is costly with long test time, thereby resulting in low assembly efficiency of the fingerprint module.

An embodiment of the present disclosure provides a method for obtaining fingerprint background data, comprising obtaining multiple frames of fingerprint images by a fingerprint module, and updating initial fingerprint background data based on at least some fingerprint images among the multiple frames of fingerprint images, thereby obtaining the fingerprint background data corresponding to the fingerprint module. The method for obtaining fingerprint background data in the embodiments of the present disclosure determines the fingerprint background data during the acquiring the fingerprint images, so that the fingerprint background data can be determined when a user enters his fingerprint for a first time without the need to obtain the fingerprint background data via a detection apparatus in a particular detection environment during the assembly of the fingerprint module, compared with the prior art. Therefore, it is not necessary to provide the detection apparatus and a detection environment during the assembly, thereby reducing the assembly costs of the fingerprint module, and improving the assembly efficiency of the fingerprint module.

The method for obtaining fingerprint background data provided in the present disclosure is described below with reference to an embodiment.

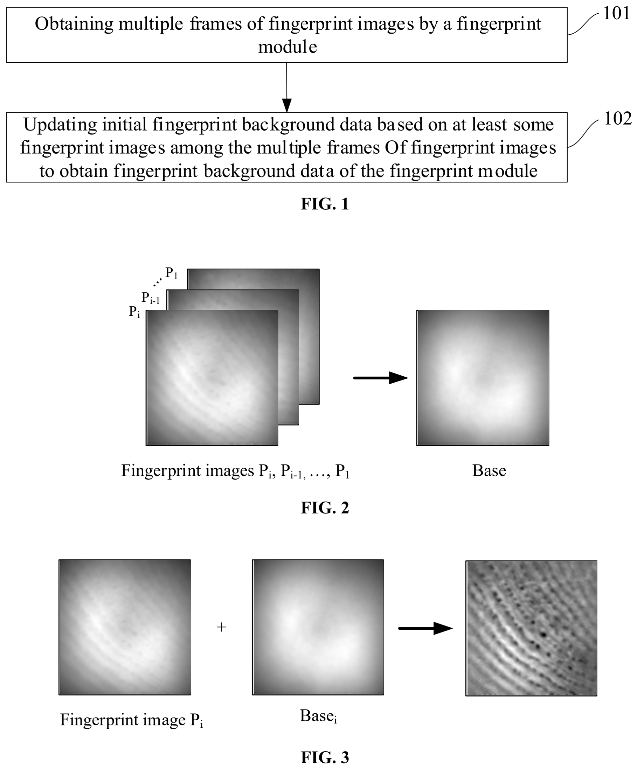

FIG. 1 is a flowchart of a method for obtaining fingerprint background data provided in an embodiment of the present disclosure. As shown in FIG. 1, the method for obtaining fingerprint background data includes the following steps 101 to 102:
Step 101: obtaining multiple frames of fingerprint images by a fingerprint module.

The multiple frames of fingerprint images are obtained. The multiple frames of fingerprint images may be multiple frames of fingerprint images acquired by the fingerprint module batchwise. For example, the fingerprint module acquires a frame of fingerprint image each time, and then obtains multiple frames of fingerprint images through a plurality of acquisitions, or the multiple frames of fingerprint images may be multiple frames of fingerprint images acquired by the fingerprint module once. In an optional embodiment, the multiple frames of fingerprint images may be acquired a plurality of times by acquiring multiple frames of fingerprint images each time, and then superimposing the multiple frames of fingerprint images to synthesize a frame of clear fingerprint image, thereby obtaining multiple frames of clear fingerprint images through a plurality of acquisitions. For example, 5 frames of fingerprint images are acquired each time, and then the acquired 5 frames of fingerprint images are superimposed to synthesize 1 frame of clear fingerprint image. A total of 6 acquisitions are performed to obtain 6 frames of clear fingerprint images.

Step 102: updating initial fingerprint background data based on at least some fingerprint images among the multiple frames of fingerprint images to obtain fingerprint background data of the fingerprint module.

The initial fingerprint background data is updated based on the at least some fingerprint images among the multiple frames of fingerprint images. For example, the multiple frames of fingerprint images may be superimposed to update the fingerprint background data. It should be understood that images corresponding to a fingerprint in different frames of fingerprint images are not exactly the same, but background images corresponding to the fingerprint are almost identical, so that the multiple frames of fingerprint images may be superposed to dilute the images of the fingerprint and highlight the background images of the fingerprint, thereby updating the fingerprint background data.

In an embodiment of the present disclosure, the multiple frames of fingerprint images are obtained by a fingerprint module, and the initial fingerprint background data is updated based on the at least some fingerprint images among the multiple frames of fingerprint images, thereby obtaining the fingerprint background data corresponding to the fingerprint module. The method for obtaining fingerprint background data in the embodiment of the present disclosure determines the fingerprint background data during the acquiring the fingerprint images, so that the fingerprint background data can be determined when a user enters his fingerprint for a first time without the need to obtain the fingerprint background data via a detection apparatus in a particular detection environment during the assembly of the fingerprint module, compared with the prior art. Therefore, it is not necessary to provide the detection apparatus and a detection environment during the assembly, thereby reducing the assembly costs of the fingerprint module, and improving the assembly efficiency of the fingerprint module.

In a possible implementation, when the initial fingerprint background data is updated based on the at least some fingerprint images among the multiple frames of fingerprint images, an (i-1)-th fingerprint background data may be updated based on an i-th image group to obtain an i-th fingerprint background data, wherein i is a positive integer smaller than or equal to N, N is equal to the number of fingerprint images included in the multiple frames of fingerprint images, a 0-th fingerprint background data is the initial fingerprint background data, the i-th image group comprises an i-th frame fingerprint image among the multiple frames of fingerprint images, and when i is greater than 1, 1st to (i-1)-th image groups do not comprise i-th to N-th frame fingerprint images; if the i-th fingerprint background data satisfies an update completion condition, the i-th fingerprint background data is determined as the fingerprint background data of the fingerprint module, or the fingerprint background data of the fingerprint module is determined based on 1st to i-th frame fingerprint images; and when the i-th fingerprint background data fails to satisfy the update completion condition and i is smaller than N, set i=i+1, and then execute an operation of updating the (i-1)-th fingerprint background data based on the i-th image group.

The multiple frames of fingerprint images may be divided into a plurality of fingerprint image groups, each of the fingerprint image groups comprises one or more frames of fingerprint images, the i-th image group comprises the i-th frame fingerprint image among the multiple frames of fingerprint images, and when i is greater than 1, the 1st to (i-1)-th image groups do not comprise the i-th to N-th frame fingerprint images, for example: there are 20 fingerprint images in total, the 1st image group comprises the 1st frame fingerprint image, but does not comprise 2nd to 20th frame fingerprint images, and an 8th image group comprises an 8th frame fingerprint image, but does not comprise 9th to 20th frame fingerprint images. It should be understood that the i-th image group may comprise at least some fingerprint images among the 1st to i-th frame fingerprint images, but must comprise the i-th frame fingerprint image, for example: the 8th image group may comprise the 1st to 8th frame fingerprint images or the 5th to 8th frame fingerprint images, etc.

The (i-1)-th fingerprint background data is updated based on the i-th image group to obtain the i-th fingerprint background data, and the determining whether the i-th fingerprint background data satisfies the preset update completion condition is determining whether the i-th fingerprint background data can accurately reflect background data corresponding to the fingerprint module based on the preset update completion condition. It should be understood that the number of fingerprint background data is 1, the fingerprint background data is updated for a 1st time to obtain the 1st fingerprint background data, the 1st fingerprint background data is updated, i.e., the 1st fingerprint background data is updated to the 2nd fingerprint background data, when the fingerprint background data is updated for a 2nd time, and the (i-1)-th fingerprint background data is updated, i.e., the (i-1)-th fingerprint background data is updated to the i-th fingerprint background data, when the fingerprint background data is updated for an i-th time.

When the i-th fingerprint background data satisfies the update completion condition, the i-th fingerprint background data is determined as the fingerprint background data of the fingerprint module, or a fingerprint background data is determined as the fingerprint background data of the fingerprint module based on the 1st to i-th frame fingerprint images. In an example, the fingerprint background data of the fingerprint module can be determined by weighted superposition of the 1st to i-th frame fingerprint images based on a preset image coefficient corresponding to each frame fingerprint image. For example, the fingerprint background data of the fingerprint module is determined as per the following formula: Base=α₁P₁+α₂P₂+...+α₁P₁, wherein the Base is used to represent the fingerprint background data of the fingerprint module, the Pᵢ is used to represent the i-th frame fingerprint image, and the αᵢ is used to represent an image coefficient corresponding to the i-th frame fingerprint image.

FIG. 2 is an example of fingerprint background data provided in an embodiment of the present disclosure. As shown in FIG. 2, the fingerprint background data may be determined based on multiple frames of fingerprint images, that is, the fingerprint background data is determined based on fingerprint images P₁ to Pᵢ in FIG. 2.

When the i-th fingerprint background data does not satisfy the update completion condition, and when i is smaller than N, set i=i+1, and execute the operation of updating the (i-1)-th fingerprint background data based on the i-th image group, that is, the i-th fingerprint background data is updated based on the (i+1)-th fingerprint image group, and so on.

In an embodiment of the present disclosure, the (i-1)-th fingerprint background data is updated based on the i-th image group to obtain the i-th fingerprint background data, thereby updating the initial fingerprint background data based on the multiple frames of fingerprint images. Since the initial background is updated using the multiple frames of fingerprint images, the determined fingerprint background data is highly accurate, and whether the fingerprint background data satisfies the update completion condition is determined to determine whether the fingerprint background data satisfies the requirements, thereby further improving the accuracy of the fingerprint background data.

In a possible implementation, if the i-th fingerprint background data does not satisfy the update completion condition, and i is equal to N, the i-th fingerprint background data is determined as the fingerprint background data of the fingerprint module, or the fingerprint background data of the fingerprint module is determined based on the 1st to i-th frame fingerprint images.

When the i-th fingerprint background data does not satisfy the update completion condition, and i is equal to N, that is, the fingerprint background data is not determined based on the acquired multiple frames of fingerprint images, in this case, the i-th fingerprint background data is determined as the fingerprint background data of the fingerprint module, or the fingerprint background data of the fingerprint module is determined based on the 1st to i-th frame fingerprint images.

It should be understood that an image number threshold of the acquired fingerprint images may be preset. When the number of fingerprint images acquired by the fingerprint module is greater than or equal to the image number threshold, the fingerprint module stops acquiring fingerprint images. In this case, if the fingerprint background data updated based on the acquired fingerprint images does not satisfy the update completion condition, the steps in the above embodiments are executed, that is, the last updated fingerprint background data is determined as the fingerprint background data corresponding to the fingerprint module, or the fingerprint background data of the fingerprint module is determined based on the fingerprint images.

In an embodiment of the present disclosure, when the i-th fingerprint background data does not satisfy the update completion condition and i is equal to N, the i-th fingerprint background data is determined as the fingerprint background data of the fingerprint module, or the fingerprint background data of the fingerprint module is determined based on the 1st to i-th frame fingerprint images, thereby determining the fingerprint background data of the fingerprint module. The number of fingerprint images for updating the fingerprint background data is limited, thereby preventing the fingerprint background data from being updated an unlimited number of times when the fingerprint background data does not satisfy the update completion condition, resulting in a long waiting time for the user to obtain the fingerprint background data, reducing the time required for the user to obtain the fingerprint background data when using it, and improving the user experience.

In a possible implementation, when the (i-1)-th fingerprint background data is updated based on the i-th image group, the (i-1)-th fingerprint background data may be updated based on the i-th frame fingerprint image among the multiple frames of fingerprint images.

When the fingerprint background data is updated, the (i-1)-th fingerprint background data may be updated based on the i-th frame fingerprint image. In an example, the fingerprint background data may be updated as per the following formula: Baseᵢ= αBaseᵢ₋₁+βPᵢ, wherein Baseᵢ is used to represent the i-th fingerprint background data, Pᵢ is used to represent the i-th frame fingerprint image, α is used to represent a coefficient corresponding to the fingerprint background data, and β is used to represent a coefficient corresponding to the fingerprint image. In an example, the i-th frame fingerprint image may be debackgrounded based on the (i-1)-th fingerprint background data, and then the coefficient corresponding to the fingerprint background data and the coefficient corresponding to the fingerprint image may be determined based on a clarity of an image corresponding to a fingerprint in the debackgrounded i-th frame fingerprint image. It should be understood that when the clarity of the image corresponding to the fingerprint in the i-th frame fingerprint image is high, it proves that the (i-1)-th fingerprint background data can accurately reflect the fingerprint background data of the fingerprint module. In this case, the α is large, and the β is small. Otherwise, it proves that the (i-1)-th fingerprint background data cannot accurately reflect the fingerprint background data of the fingerprint module. In this case, the α is small, and the β is large.

In an embodiment of the present disclosure, the (i-1)-th fingerprint background data is updated based on the i-th frame fingerprint image among the multiple frames of fingerprint images, so that the fingerprint background data may be updated by superimposing the fingerprint image and a fingerprint background data updated based on a previous fingerprint image, and the fingerprint background data may be determined based on a plurality of fingerprint images. Moreover, weighted superimposition may be performed on the fingerprint background data updated based on a current fingerprint image and the previous fingerprint image, thereby ensuring that the fingerprint background data can accurately reflect the fingerprint background corresponding to the fingerprint module, and improving the accuracy of the fingerprint background data.

In a possible implementation, when the (i-1)-th fingerprint background data is updated based on the i-th image group, the (i-1)-th fingerprint background data may be updated based on m-th to i-th frame fingerprint images among the multiple frames of fingerprint images, wherein the m is a positive integer smaller than i.

When the (i-1)-th fingerprint background data is updated, the (i-1)-th fingerprint background data may be updated based on at least some images in the i-th image group. In an example, the (i-1)-th fingerprint background data may be updated as per the following formula: Baseᵢ= αBaseᵢ₋₁+αₘPₘ+...+αᵢPᵢ. The fingerprint background data may be updated based on the m-th to i-th frame fingerprint images. For example, when the fingerprint background data is updated for the 1st time, the initial fingerprint data is updated based on the 1st frame fingerprint image; when the fingerprint background data is updated for the 5th time, the 4th fingerprint background data is updated based on the 1st to 5th frame fingerprint images, or when the fingerprint background data is updated for the 5th time, the 4th fingerprint background data is updated based on the 3rd to 5th frame fingerprint images, and so on.

In an embodiment of the present disclosure, the (i-1)-th fingerprint background data is updated based on at least some fingerprint images in the i-th image group, so that each time the fingerprint background data is updated, it may be updated based on the multiple frames of fingerprint images, so that the multiple frames of fingerprint images may be superimposed each time the fingerprint background data is updated, thereby shortening the time for the fingerprint background data to satisfy the update completion condition, and improving the efficiency of updating the fingerprint background data.

In a possible implementation, the update completion condition comprises at least one of: (i) a clarity of an image of a fingerprint in the i-th frame fingerprint image determined based on the i-th fingerprint background data is greater than a preset clarity threshold. (ii) A fingerprint template corresponding to the i-th frame fingerprint image satisfies a preset fingerprint template completion condition, wherein the fingerprint template corresponding to the i-th frame fingerprint image is obtained based on the 1st to i-th frame fingerprint images and 1st to i-th fingerprint background data.

FIG. 3 is a schematic diagram of an image of a fingerprint provided in an embodiment of the present disclosure. As shown in FIG. 3, the fingerprint image may be determined based on the i-th frame fingerprint image and the i-th fingerprint background data. It should be understood that the i-th frame fingerprint image can be debackgrounded based on the i-th fingerprint background data, thereby obtaining an image only including the fingerprint. Whether the clarity of the image of the fingerprint shown in FIG. 3 satisfies the clarity threshold is determined. If the clarity of the image of the fingerprint satisfies the clarity threshold, it proves that most background in the i-th frame fingerprint image is removed, and the i-th fingerprint background data satisfies the requirements.

It should be noted that when the initial fingerprint background data is updated based on at least some fingerprint images among the multiple frames of fingerprint images, the multiple frames of fingerprint images will be registered in the fingerprint template sequentially, and the fingerprint template corresponding to the i-th frame fingerprint image is obtained based on the 1st to i-th frame fingerprint images and the 1st to i-th fingerprint background data. Therefore, when the fingerprint template corresponding to the i-th frame fingerprint image satisfies the fingerprint template completion condition, it proves that the i-th fingerprint background data satisfies the requirements.

In an embodiment of the present disclosure, the update completion condition includes at least one of the above conditions, thereby limiting the update completion condition of the fingerprint background data, stopping updating the fingerprint background data when the fingerprint background data satisfies the requirements, and enabling the fingerprint background data to satisfy the use requirements.

In a possible implementation, the method for obtaining fingerprint background data may further debackground a k-th frame fingerprint image based on a k-th fingerprint background data to obtain a k-th first denoised fingerprint image, wherein the k is a positive integer smaller than or equal to i, and splice 1st to i-th first denoised fingerprint images to obtain the fingerprint template corresponding to the i-th frame fingerprint image.

When the fingerprint template is determined, the k-th frame fingerprint image may be debackgrounded based on the k-th fingerprint background data, that is, the 1st frame fingerprint image is debackgrounded based on the 1st fingerprint background data after the fingerprint background data is updated for the 1st time, to obtain the 1st first de-noised fingerprint image, then the 1st first de-noised fingerprint image is registered in the fingerprint template, and then whether the fingerprint template satisfies the fingerprint template completion condition in the above embodiments is determined. If the fingerprint template does not satisfy the fingerprint template completion condition, it is equivalent to that the 1st fingerprint background data does not satisfy the update completion condition, the fingerprint background data is updated for the 2nd time, the 2nd frame fingerprint image is debackgrounded based on the 2nd fingerprint background data to obtain the 2nd first de-noised fingerprint image, and the 2nd first de-noised fingerprint image is registered in the fingerprint template for re-determination, and so on.

When the first denoised fingerprint images are registered in the fingerprint template, the 1st to i-th first denoised fingerprint images may be spliced. In an example, positions of the 1st to i-th first denoised fingerprint images corresponding to a fingerprint of a finger can be identified, and the 1st to i-th first denoised fingerprint images can be spliced based on the positions of the 1st to i-th first denoised fingerprint images corresponding to the finger, so that the spliced fingerprint template corresponds to the fingerprint of the finger.

It should be noted that the first denoised fingerprint images are not simply spliced together, but a plurality of first denoised fingerprint images are synthesized into the fingerprint template. For example, partial regions of different first denoised fingerprint images may be overlapped and superimposed. The splicing process is illustrated below based on an example. A first denoised fingerprint image 1 comprises an image corresponding to a fingerprint region 1 and an image corresponding to a fingerprint region 2, and a first denoised fingerprint image 2 comprises the image corresponding to the fingerprint region 2 and an image corresponding to a fingerprint region 3. In this case, the image corresponding to the fingerprint region 2 may be removed from the first denoised fingerprint image 1 or the first denoised fingerprint image 2, and then the first denoised fingerprint image 1 and the first denoised fingerprint image 2 may be spliced, or the image corresponding to fingerprint region 2 in the first denoised fingerprint image 1 and the first denoised fingerprint image 2 may be aligned and superimposed (for example, superimposed in the manner of *γ*A+*δ*B, wherein A is the image corresponding to the fingerprint region 2 in the first denoised fingerprint image 1, B is the image corresponding to the fingerprint region 2 in the first denoised fingerprint image 2, and *γ* and *δ* are corresponding superposition coefficients), to obtain a spliced fingerprint image for the fingerprint region 1, the fingerprint region 2, and the fingerprint region 3. The above operations are performed on the plurality of first denoised fingerprint images, to splice the plurality of first denoised fingerprint images into a complete fingerprint image of the finger, that is, the plurality of first denoised fingerprint images may be synthesized into the fingerprint template for fingerprint recognition. The splicing of the denoised fingerprint images into the fingerprint template described in subsequent embodiments of the present disclosure is applicable to the above explanation.

In an embodiment of the present disclosure, the k-th frame fingerprint image is debackgrounded based on the k-th fingerprint background data to obtain the k-th first denoised fingerprint image, and the 1st to i-th first denoised fingerprint images are spliced to obtain the fingerprint template corresponding to the i-th frame fingerprint image, thereby determining the fingerprint template. The plurality of first denoised fingerprint images of the spliced fingerprint template are debackgrounded, thereby reducing the influence of the environment on the fingerprint template, so that the determined fingerprint template is closer to the fingerprint image of the finger. The fingerprint images are debackgrounded based on the fingerprint background data, and when the fingerprint template satisfies the fingerprint template completion condition, the fingerprint images are accurate, so that more background is removed when the fingerprint images are debackgrounded, and so that the fingerprint background data of the fingerprint module is accurate, thereby improving the accuracy of the fingerprint background data.

In a possible implementation, if the i-th fingerprint background data satisfies the update completion condition and the fingerprint background data of the fingerprint module is obtained, the 1st to i-th frame fingerprint images are debackgrounded respectively based on the fingerprint background data of the fingerprint module, to obtain i number of second denoised fingerprint images, and the i number of second denoised fingerprint images are spliced to obtain the fingerprint template.

The i-th fingerprint background data satisfies the update completion condition, that is, after the fingerprint background data of the fingerprint module is updated, the acquired 1st to i-th frame fingerprint images are re-debackgrounded based on the fingerprint background data, to obtain a plurality of second denoised fingerprint images, and the plurality of second denoised fingerprint images are spliced to obtain the fingerprint template, which can be used for fingerprint recognition by the fingerprint module.

In an embodiment of the present disclosure, after the fingerprint background data of the fingerprint module is determined, the multiple frames of fingerprint images are debackgrounded based on the fingerprint background data, to obtain multiple frames of second denoised fingerprint images, thereby obtaining the fingerprint template based on the multiple frames of second denoised fingerprint images. Since the fingerprint background data is accurate, there is less fingerprint background in the multiple frames of second denoised fingerprint images, and the fingerprint image is clear. Therefore, the fingerprint template spliced from the second denoised fingerprint images has a high clarity, and can accurately reflect the fingerprint of the finger, thereby improving the accuracy of the fingerprint template.

In a possible implementation, the initial fingerprint background data comprises blank image data, or the initial fingerprint background data comprises image data acquired by the fingerprint module when an identifier image is displayed on a screen and an identified region of the fingerprint module does not comprise a to-be-identified object, wherein the identifier image is used to indicate a position of the identified region on the screen.

The initial fingerprint background data may be blank image data. In this case, when the initial fingerprint background data is updated based on the 1st frame fingerprint image, since the initial fingerprint background data is blank image data, the 1st frame fingerprint image is updated to the 1st fingerprint background data.

Or, the initial fingerprint background data may also be the image data acquired by the fingerprint module when the identifier image is displayed on the screen and the identified region of the fingerprint module does not comprise the to-be-identified object. It should be understood that when the fingerprint image is acquired, and when the finger presses a position on the screen corresponding to a fingerprint recognition region in the fingerprint module, the screen will display a circular or other shaped highlighted identified image, and then acquire the fingerprint image. Therefore, when the identifier image is displayed on the screen and the identified region of the fingerprint module does not comprise the to-be-identified object, the fingerprint module acquires the image data. The image data can be reflected in image data during blank sampling by the fingerprint module, that is, can be used as the initial background data.

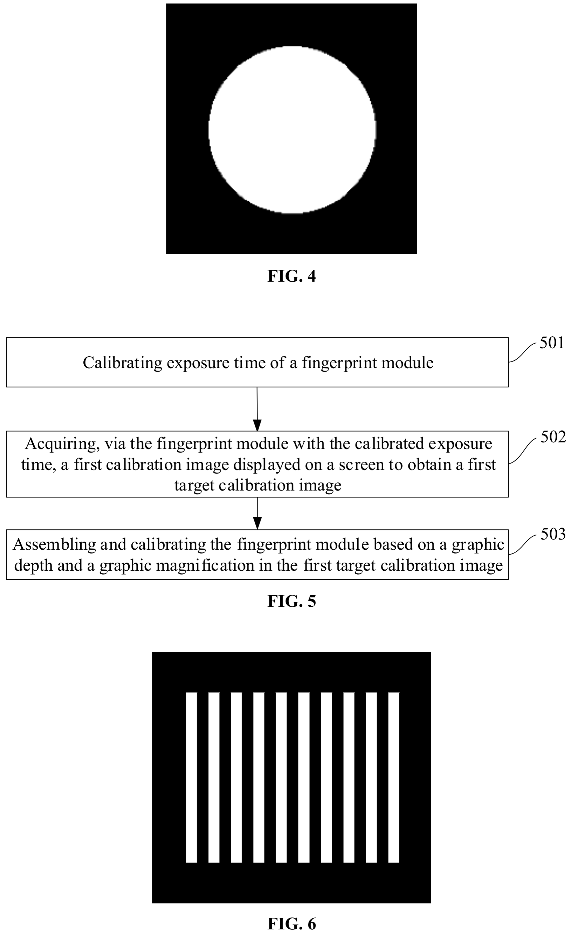

In an example, FIG. 4 is a schematic diagram of an identifier image provided in an embodiment of the present disclosure. As shown in FIG. 4, the identifier image may be a circular light spot displayed on a screen. It should be understood that FIG. 4 is only an example, and the specific identifier image is not limited in the embodiment of the present disclosure.

In an embodiment of the present disclosure, the initial fingerprint background data comprises blank image data, or the initial fingerprint background data comprises the identifier image. Since the identifier image can partially reflect a current environment and fingerprint background data, environmental influence factors can be removed when the fingerprint background data is determined, thereby improving the accuracy of the fingerprint background data and the efficiency in determining the fingerprint background data.

FIG. 5 is a flowchart of a method for assembling and calibrating a fingerprint module provided in an embodiment of the present disclosure. As shown in FIG. 5, the method for assembling and calibrating a fingerprint module includes the following steps 501 to 503:

Step 501: calibrating exposure time of the fingerprint module.

The exposure time of the fingerprint module affects brightness of an image acquired by the fingerprint module. The exposure time of the fingerprint module can be calibrated to prevent the brightness of the image acquired by the fingerprint module from exceeding an upper limit of brightness.

Step 502: acquiring, via the fingerprint module with the calibrated exposure time, a first calibration image displayed on a screen to obtain a first target calibration image.

The first calibration image displayed on the screen is acquired by the fingerprint module with the calibrated exposure time. In an example, FIG. 6 is a schematic diagram of a first calibration image provided in an embodiment of the present disclosure. As shown in FIG. 6, the first calibration image may be a striped image. It should be understood that FIG. 6 is only an example, and the first calibration image may also be, e.g., a circular, annular, or radial calibration image, and a specific form of the calibration image is not limited.

Step 503: assembling and calibrating the fingerprint module based on a depth and a magnification of the first target calibration image.

The fingerprint module is assembled and calibrated based on an image depth in the first target calibration image, that is, a color difference among different colors, and the magnification of the first target calibration image, that is, an image size ratio of the first target calibration image to the first calibration image, such as: a ratio of a side length, perimeter, area, diameter, etc., for example: a distance from a lens measurement surface of the fingerprint module to a screen surface may be adjusted.

In an embodiment of the present disclosure, the first calibration image displayed on the screen is acquired by the fingerprint module with the calibrated exposure time, and the fingerprint module is assembled and calibrated based on the depth and the magnification of the obtained first target calibration image. Since the fingerprint module can be assembled and calibrated by acquiring an image via the fingerprint module, the method for assembling and calibrating a fingerprint module provided in an embodiment of the present disclosure neither needs to use a calibration device, nor needs to perform assembly and calibration in a particular environment, thereby reducing the assembly and calibration costs of the fingerprint module.

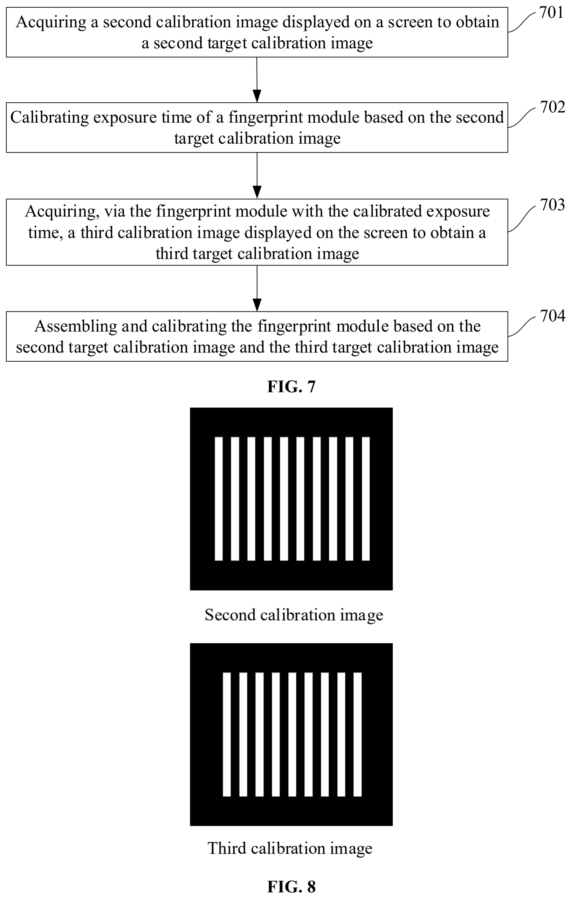

FIG. 7 is a flowchart of another method for assembling and calibrating a fingerprint module provided in an embodiment of the present disclosure. As shown in FIG. 7, the method for assembling and calibrating a fingerprint module includes the following steps 701 to 704:
Step 701: acquiring a second calibration image displayed on a screen to obtain a second target calibration image.
Step 702: calibrating exposure time of the fingerprint module based on the second target calibration image.

The exposure time of the fingerprint module is calibrated based on the second target calibration image, so that when the fingerprint module acquires a subsequent image, brightness of a brightest point in the subsequent image is consistent with brightness of a brightest point in the second target calibration image, thereby eliminating the influence of the brightness on the calibration process.

Step 703: acquiring, via the fingerprint module with the calibrated exposure time, a third calibration image displayed on the screen to obtain a third target calibration image.

Since the third calibration image displayed on the screen is acquired by the fingerprint module with the calibrated exposure time, the brightness of the obtained third target calibration image is less than or equal to the brightness of the brightest point in the second target calibration image.

Step 704: assembling and calibrating the fingerprint module based on the second target calibration image and the third target calibration image.

In an example, the third target calibration image may be subtracted from the second target calibration image, and an absolute value of the image obtained after the subtraction is obtained. The second target calibration image comprises the influence of an environmental signal, and the third target calibration image comprises the same influence of the environmental signal, so that the image obtained after the subtraction can remove the influence of the environmental signal and is more referenceable.

The fingerprint module is assembled and calibrated based on the second target calibration image and the third target calibration image. In another example, a distance from a lens measurement surface of the fingerprint module to a screen surface may be adjusted based on a depth of the image obtained by subtracting the third target calibration image from the second target calibration image.

In an embodiment of the present disclosure, the second calibration image displayed on the screen is acquired to obtain the second target calibration image, the exposure time of the fingerprint module is calibrated based on the second target calibration image, and the third calibration image displayed on the screen is acquired by the fingerprint module with the calibrated exposure time to obtain the third target calibration image, thereby assembling and calibrating the fingerprint module based on the second target calibration image and the third target calibration image. The exposure time of the fingerprint module is calibrated after the second calibration image is acquired, thereby preventing from occurrence of an error in the assembly and calibration of the fingerprint module due to different brightness between the second target calibration image and the third target calibration image, and the fingerprint module is assembled and calibrated based on the second target calibration image and the third target calibration image, thereby avoiding the influence of the environment on the assembly and calibration process. The image can be acquired by the fingerprint module to assemble and calibrate the fingerprint module, so that the method for assembling and calibrating a fingerprint module provided in an embodiment of the present disclosure neither needs to use a calibration device, nor needs to perform assembly and calibration in a particular environment, thereby reducing the assembly and calibration costs of the fingerprint module.

In a possible implementation, the second calibration image is an identifier image, or the second calibration image is inverted from the third calibration image, wherein the identifier image is used to indicate a position of an identified region on the screen.

The second calibration image may be an identifier image as shown in FIG. 4. In an example, FIG. 8 is a schematic diagram of a calibration image provided in an embodiment of the present disclosure. As shown in FIG. 8, the second calibration image may be inverted from the third calibration image, that is, image colors of the second calibration image and the third calibration image are complementary.

In an embodiment of the present disclosure, the second calibration image is an identifier image, or the second calibration image is inverted from the third calibration image, so that the environmental influence during the assembly and calibration of the fingerprint module can be removed based on the second calibration image and the third calibration image, thereby improving the accuracy of the module assembly and calibration process.

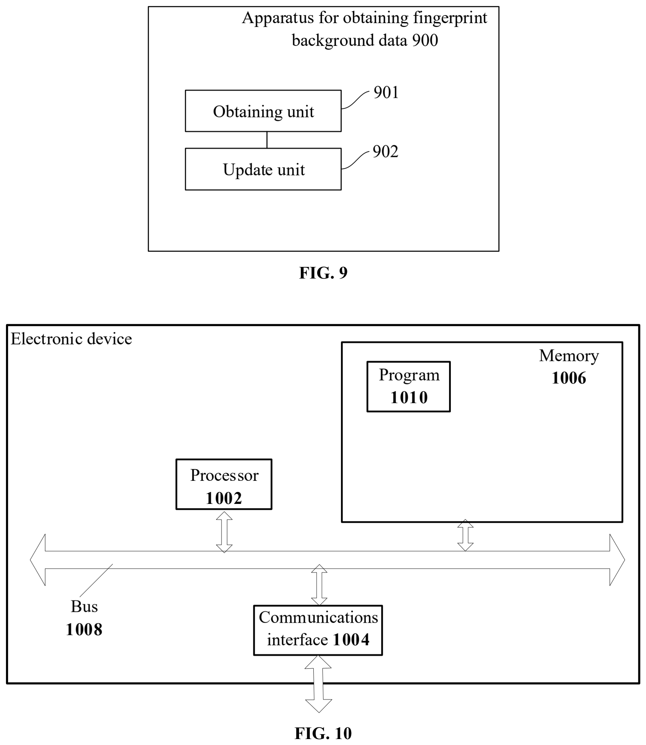

FIG. 9 is a schematic diagram of an apparatus for obtaining fingerprint background data provided in an embodiment of the present disclosure. As shown in FIG. 9, the apparatus 900 comprises:
an obtaining unit 901 configured to obtain multiple frames of fingerprint images by a fingerprint module; and
an update unit 902 configured to update initial fingerprint background data based on at least some fingerprint images among the multiple frames of fingerprint images to obtain fingerprint background data of the fingerprint module.

In an embodiment of the present disclosure, the obtaining unit 901 can be configured to execute step 101 in the above method embodiments, and the update unit 902 can be configured to execute step 102 in the above method embodiments.

In a possible implementation, the update unit 902 may be further configured to update an (i-1)-th fingerprint background data based on an i-th image group to obtain an i-th fingerprint background data, wherein i is a positive integer smaller than or equal to N, N is equal to the number of fingerprint images included in the multiple frames of fingerprint images, a 0-th fingerprint background data is the initial fingerprint background data, the i-th image group comprises an i-th frame fingerprint image among the multiple frames of fingerprint images, and when i is greater than 1, 1st to (i-1)-th image groups do not comprise i-th to N-th frame fingerprint images; determine, in response to the i-th fingerprint background data satisfying an update completion condition, the i-th fingerprint background data as the fingerprint background data of the fingerprint module, or determine the fingerprint background data of the fingerprint module based on 1st to i-th frame fingerprint images; and set i=i+1 in response to the i-th fingerprint background data failing to satisfy the update completion condition and i being smaller than N, and then execute the operation of updating the (i-1)-th fingerprint background data based on the i-th image group.

In a possible implementation, the update unit 902 may be further configured to determine, in response to the i-th fingerprint background data failing to satisfy the update completion condition, and i being equal to N, the i-th fingerprint background data as the fingerprint background data of the fingerprint module, or determine the fingerprint background data of the fingerprint module based on the 1st to i-th frame fingerprint images.

In a possible implementation, the update unit 902 may be further configured to update the (i-1)-th fingerprint background data based on the i-th frame fingerprint image among the multiple frames of fingerprint images.

In a possible implementation, the update unit 902 may be further configured to update the (i-1)-th fingerprint background data based on m-th to i-th frame fingerprint images among the multiple frames of fingerprint images, wherein m is a positive integer smaller than i.

In a possible implementation, the update completion condition comprises at least one of: (i) a clarity of an image of a fingerprint in the i-th frame fingerprint image determined based on the i-th fingerprint background data is greater than a preset clarity threshold; and (ii) a fingerprint template corresponding to the i-th frame fingerprint image satisfies a preset fingerprint template completion condition, wherein the fingerprint template corresponding to the i-th frame fingerprint image is obtained based on the 1st to i-th frame fingerprint images and 1st to i-th fingerprint background data.

In a possible implementation, the update unit 902 may be further configured to debackground a k-th frame fingerprint image based on a k-th fingerprint background data to obtain a k-th first denoised fingerprint image, wherein the k is a positive integer smaller than or equal to i; and splice 1st to i-th first denoised fingerprint images to obtain the fingerprint template corresponding to the i-th frame fingerprint image.

In a possible implementation, the update unit 902 may be further configured to debackground, in response to the i-th fingerprint background data satisfying the update completion condition and the fingerprint background data of the fingerprint module being obtained, the 1st to i-th frame fingerprint images respectively based on the fingerprint background data of the fingerprint module, to obtain i number of second denoised fingerprint images; and splice the i number of second denoised fingerprint images to obtain the fingerprint template.

In a possible implementation, the initial fingerprint background data comprises blank image data; or the initial fingerprint background data comprises image data acquired by the fingerprint module when an identifier image is displayed on a screen and an identified region of the fingerprint module does not comprise a to-be-identified object, wherein the identifier image is used to indicate a position of the identified region on the screen.

In a possible implementation, the fingerprint module is assembled and calibrated by: calibrating exposure time of the fingerprint module; acquiring, via the fingerprint module with the calibrated exposure time, a first calibration image displayed on a screen to obtain a first target calibration image; and assembling and calibrating the fingerprint module based on a depth and a magnification of the first target calibration image.

In a possible implementation, a second calibration image displayed on the screen is acquired to obtain a second target calibration image; the exposure time of the fingerprint module is calibrated based on the second target calibration image; a third calibration image displayed on the screen is acquired by the fingerprint module with the calibrated exposure time to obtain a third target calibration image, wherein brightness of the third target calibration image is smaller than or equal to brightness of a brightest point in the second target calibration image; and the fingerprint module is assembled and calibrated based on the second target calibration image and the third target calibration image.

In a possible implementation, the second calibration image is an identifier image, or the second calibration image is inverted from the third calibration image, wherein the identifier image is used to indicate a position of an identified region on the screen.

Referring to FIG. 10, a schematic structural diagram of an electronic device according to an embodiment of the present disclosure is shown. Specific implementations of the electronic device are not limited in specific embodiments of the present disclosure.

As shown in FIG. 10, the electronic device may comprise: a processor 1002, a communications interface 1004, a memory 1006, and a communication bus 1008,
wherein:
the processor 1002, the communications interface 1004, and the memory 1006 communicate with each other through the communication bus 1008.

The communications interface 1004 is configured to communicate with other electronic devices or servers.

The processor 1002 is configured to execute program 1010, and specifically may implement the relevant steps in the above embodiments of the method for obtaining fingerprint background data.

Specifically, the program 1010 may comprise a program code. The program code comprises computer operation instructions.

The processor 1002 may be a central processing unit (CPU), or a Graphics Processing Unit (GPU), or an Application Specific Integrated Circuit (ASIC), or one or more integrated circuits configured to implement embodiments of the present disclosure. One or more processors included in a smart device may be processors of a same type, e.g., one or more CPUs; or one or more GPUs; or may be processors of different types, e.g., one or more CPUs, one or more GPUs, and one or more ASICs.

The memory 1006 is configured to store the program 1010. The memory 1006 may include a high-speed RAM memory, and may further include a non-volatile memory, e.g., at least one disk memory.

The program 1010 specifically may be used for causing the processor 1002 to implement the method for obtaining fingerprint background data in any one of the above embodiments.

Corresponding description of the corresponding steps and units in any one of the above embodiments of the method for obtaining fingerprint background data may be referred to for specific implementations of the steps in the program 1010, which will not be repeated here. Those skilled in the art can clearly understand that, for convenience and simplicity of description, the description of corresponding processes in the above method embodiments may be referred to for specific operating processes of the above-described devices and modules, which will not be repeated here.

In an embodiment of the present disclosure, the multiple frames of fingerprint images acquired by a fingerprint module are obtained, and the initial fingerprint background data is updated based on the at least some fingerprint images among the multiple frames of fingerprint images, thereby obtaining the fingerprint background data corresponding to the fingerprint module. The method for obtaining fingerprint background data in the embodiment of the present disclosure determines the fingerprint background data during the acquiring the fingerprint images, so that the fingerprint background data can be determined when a user enters his fingerprint for a first time without the need to obtain the fingerprint background data via a detection apparatus in a particular detection environment during the assembly of the fingerprint module, compared with the prior art. Therefore, it is not necessary to provide the detection apparatus and a detection environment during the assembly, thereby reducing the assembly costs of the fingerprint module, and improving the assembly efficiency of the fingerprint module.

An embodiment of the present disclosure further provides a computer program product, comprising a computer instruction, the computer instruction instructing a computing device to implement the corresponding operations of any one method in the above method embodiments.

It should be noted that, depending on the implementation requirements, the components/steps described in the embodiments of the present disclosure may be split into more components/steps, or two or more components/steps or partial operations of the components/steps may be combined into novel components/steps to achieve the goal of the embodiments of the present disclosure.

The above method according to the embodiments of the present disclosure may be implemented in hardware or firmware, or be implemented as software or a computer code storable in a recording medium (such as a CD ROM, a RAM, a floppy disk, a hard disk, or a magneto-optical disk), or be implemented as a computer code that is downloaded from a network, is originally stored in a remote recording medium or a non-transitory machine-readable medium, and will be stored in a local recording medium, such that the method described herein may be processed by such software stored on a recording medium using a universal computer, a dedicated processor, or programmable or dedicated hardware (such as an ASIC or FPGA). It is understandable that a computer, a processor, a microprocessor controller, or programmable hardware comprises a storage component (e.g., a RAM, a ROM, or a flash memory) that can store or receive software or a computer code. The method for obtaining fingerprint background data described herein is implemented when the software or the computer code is accessed and executed by the computer, the processor, or the hardware. Further, when a universal computer accesses the code for implementing the method for obtaining fingerprint background data shown herein, the execution of the code converts the universal computer to a dedicated computer configured to execute the method for obtaining fingerprint background data shown herein.

As will be appreciated by those of ordinary skills in the art, the various example units and method steps described in combination with the embodiments disclosed herein can be implemented by electronic hardware, or a combination of computer software and electronic hardware. Whether these functions are executed by hardware or software depends on particular applications and design constraints of the technical solutions. Those skilled in the art may implement the described functions for each particular application using different methods, but such implementation should not be considered as falling beyond the scope of the embodiments of the present disclosure.

The above embodiments are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions are also encompassed within the scope of the embodiments of the present disclosure, and the scope of patent protection of the embodiments of the present disclosure should be defined by the claims.

## Claims

1. A method for obtaining fingerprint background data, comprising:
obtaining multiple frames of fingerprint images by a fingerprint module; and
updating initial fingerprint background data based on at least some of the multiple frames of fingerprint images to obtain fingerprint background data of the fingerprint module.

2. The method according to claim 1, wherein updating the initial fingerprint background data based on the at least some of the multiple frames of fingerprint images comprises:
updating an (i-1)-th fingerprint background data based on an i-th image group to obtain an i-th fingerprint background data, wherein i is a positive integer smaller than or equal to N, N is a number of fingerprint images included in the multiple frames of fingerprint images, a 0-th fingerprint background data is the initial fingerprint background data, the i-th image group comprises an i-th frame of fingerprint image among the multiple frames of fingerprint images, and when i is greater than 1, a 1st to (i-1)-th image groups do not comprise i-th to N-th frames of fingerprint images;
when the i-th fingerprint background data satisfies an update completion condition, determining the i-th fingerprint background data as the fingerprint background data of the fingerprint module, or determining the fingerprint background data of the fingerprint module based on the 1st to i-th frame fingerprint images; and
when the i-th fingerprint background data fails to satisfy the update completion condition and i is smaller than N, setting i=i+1, and then executing a step of updating the (i-1)-th fingerprint background data based on the i-th image group.

3. The method according to claim 2, wherein the method further comprises:
when the i-th fingerprint background data fails to satisfy the update completion condition and i is equal to N, determining the i-th fingerprint background data as the fingerprint background data of the fingerprint module, or determining the fingerprint background data of the fingerprint module based on the 1st to i-th frame fingerprint images.

4. The method according to claim 2, wherein updating the (i-1)-th fingerprint background data based on the i-th image group comprises:
updating the (i-1)-th fingerprint background data based on the i-th frame fingerprint image among the multiple frames of fingerprint images.

5. The method according to claim 2, wherein updating the (i-1)-th fingerprint background data based on the i-th image group comprises:
updating the (i-1)-th fingerprint background data based on m-th to i-th frame fingerprint images among the multiple frames of fingerprint images, wherein m is a positive integer smaller than i.

6. The method according to any one of claims 2-5, wherein the update completion condition comprises at least one of:
(i) a clarity of an image of a fingerprint in the i-th frame fingerprint image determined based on the i-th fingerprint background data is greater than a preset clarity threshold; and
(ii) a fingerprint template corresponding to the i-th frame fingerprint image satisfies a preset fingerprint template completion condition, wherein the fingerprint template corresponding to the i-th frame fingerprint image is obtained based on the 1st to i-th frame fingerprint images and 1st to i-th fingerprint background data.

7. The method according to claim 6, wherein the method further comprises:
debackgrounding a k-th frame fingerprint image based on a k-th fingerprint background data to obtain a k-th first denoised fingerprint image, wherein k is a positive integer smaller than or equal to i; and
splicing 1st to i-th first denoised fingerprint images to obtain the fingerprint template corresponding to the i-th frame fingerprint image.

8. The method according to claim 7, wherein the method further comprises:
when the i-th fingerprint background data satisfies the update completion condition and the fingerprint background data of the fingerprint module is obtained, debackgrounding the 1st to i-th frame fingerprint images based on the fingerprint background data of the fingerprint module to obtain an i number of second denoised fingerprint images; and
splicing the i number of second denoised fingerprint images to obtain the fingerprint template.

9. The method according to claim 1, wherein
the initial fingerprint background data comprises blank image data;
or
the initial fingerprint background data comprises image data acquired by the fingerprint module when an identifier image is displayed on a screen and an identified region of the fingerprint module does not includes a to-be-identified object, wherein the identifier image is used to indicate a position of the identified region on the screen.

10. The method according to claim 1, wherein the fingerprint module is assembled and calibrated by:
calibrating exposure time of the fingerprint module;
acquiring, via the fingerprint module with the calibrated exposure time, a first calibration image displayed on a screen to obtain a first target calibration image; and
assembling and calibrating the fingerprint module based on a depth and a magnification of the first target calibration image.

11. The method according to claim 10, wherein acquiring, via the fingerprint module with calibrated exposure time, the first calibration image displayed on the screen to obtain the first target calibration image comprises:
acquiring a second calibration image displayed on the screen to obtain a second target calibration image;
calibrating the exposure time of the fingerprint module based on the second target calibration image;
acquiring, via the fingerprint module with the calibrated exposure time, a third calibration image displayed on the screen to obtain a third target calibration image, wherein brightness of the third target calibration image is smaller than or equal to brightness of a brightest point in the second target calibration image; and
assembling and calibrating the fingerprint module based on the second target calibration image and the third target calibration image.

12. The method according to claim 11, wherein the second calibration image is an identifier image, or the second calibration image is inverted from the third calibration image, wherein the identifier image is used to indicate a position of an identified region on the screen.

13. An apparatus for obtaining fingerprint background data, comprising:
an obtaining unit configured to obtain multiple frames of fingerprint images by a fingerprint module; and
an update unit configured to update initial fingerprint background data based on at least some fingerprint images among the multiple frames of fingerprint images to obtain fingerprint background data of the fingerprint module.

14. An electronic device, comprising: a processor, a memory, a communications interface, and a communication bus, wherein the processor, the memory, and the communications interface communicate with each other through the communication bus; and
the memory is configured to store at least one executable instruction, wherein the at least one executable instruction enables the processor to execute the method for obtaining fingerprint background data according to any one of claims 1-12.

15. A computer storage medium, storing a computer program thereon, wherein the program, when executed by a processor, implements the method for obtaining fingerprint background data according to any one of claims 1-12.
